# EUROPEAN PATENT SPECIFICATION

(11) **EP 4 310 981 B1**
(45) Date of publication and mention of the grant of the patent: **18.03.2026**
(21) Application number: 23786454.1
(22) Date of filing: 12.04.2023
(51) Int. Cl.: H01M 10/0585, H01M 4/13, H01M 10/0562, H01M 10/052, H01M 4/02

(54) **ALL-SOLID-STATE BATTERY**
FESTKÖRPERBATTERIE
BATTERIE ENTIÈREMENT SOLIDE

(30) Priority: 09.05.2022 KR 20220056342; 07.04.2023 KR 20230046259
(43) Date of publication of application: 24.01.2024
(73) Proprietor: LG Energy Solution, Ltd., Seoul 07335 (KR)
(72) Inventor: JIN, Guilong, Yuseong-gu, Daejeon 34122 (KR)
(74) Representative: Goddar, Heinz J.
(86) International application number: PCT/KR2023/004911
(87) International publication number: WO 2023/219283

(56) References cited:
- JP-A- 2016 164 888
- JP-A- 2021 077 643
- KR-A- 20210 057 271
- KR-A- 20210 105 286
- KR-A- 20220 020 533
- KR-A- 20220 028 933
- US-A1- 2022 052 343

## Description

### [Technical Field]

The present invention relates to an all-solid-state battery, and more particularly, to an all-solid-state battery with improved lifetime characteristics by including a plurality of composite carbon layers between a solid electrolyte membrane and a negative electrode.

### [Background Art]

The importance of lithium secondary batteries is increasing due to the increase in the use of vehicles, computers, and portable terminals. Among them, the development of lithium secondary batteries capable of obtaining high energy density with a light weight is particularly required. These lithium secondary batteries may be manufactured by inserting a separator between a positive electrode and a negative electrode and then injecting liquid electrolyte to manufacture a lithium-ion battery, or by interposing a solid electrolyte membrane between a positive electrode and a negative electrode to manufacture an all-solid-state battery.

Among them, a lithium-ion battery using a liquid electrolyte has a structure in which a negative electrode and a positive electrode are partitioned by a separator, and thus if the separator is damaged due to deformation or external impact, a short circuit may occur, which may lead to dangers such as overheating or explosion.

On the other hand, an all-solid-state battery using a solid electrolyte increases the safety of the battery and can prevent leakage of the electrolyte solution, thereby improving the reliability of the battery. However, such an all-solid-state battery has a problem in that a short circuit occurs in the cell due to lithium dendrite generated on the lithium metal negative electrode when charging and discharging are repeated.

US 2022/052343 A1 discloses an all-solid-state battery, comprising: a positive electrode, a negative electrode, a solid electrolyte membrane of an argyrodite structure, a first composite carbon layer adjacent to the solid electrolyte membrane and having a thickness of 3-30 micron, and a second composite carbon layer adjacent to the negative electrode and having a thickness of 0.5-5 micron.

KR 20210105286 A discloses an all-solid-state battery, comprising: a positive electrode, a negative electrode, a solid electrolyte membrane of argyrodite structure, a first binder-containing composite carbon layer adjacent to the solid electrolyte membrane and having a thickness of 0.01 to 10 micron, and a second binder-containing composite carbon layer adjacent to the negative electrode and having a thickness of 1-50 micron.

### [Disclosure]

### [Technical Problem]

It is an object of the present invention to provide an all-solid-state battery which has improved lifetime characteristics by incorporating composite carbon layers with different contents of binder between a solid electrolyte membrane and a negative electrode to induce a difference in electrical conductivity therebetween, and thus due to the resulting difference in voltage, precipitate lithium in the plane direction between the composite carbon layers.

### [Technical Solution]

One example of the present invention provides an all-solid-state battery comprising a positive electrode, a negative electrode and a solid electrolyte membrane interposed between the positive electrode and the negative electrode, and further comprising a first composite carbon layer and a second composite carbon layer between the negative electrode and the solid electrolyte membrane, wherein the first composite carbon layer is provided adjacent to one surface of the solid electrolyte membrane, and the second composite carbon layer is provided adjacent to one surface of the negative electrode, wherein the first composite carbon layer and the second composite carbon layer each contain a carbon material and a binder, and the content of the binder in the first composite carbon layer and the second composite carbon layer is different from each other,
and the content of the binder in the first composite carbon layer is represented by the weight ratio of the carbon material and the binder in the first composite carbon layer,
and the content of the binder in the second composite carbon layer is represented by the weight ratio of the carbon material and the binder in the second composite carbon layer, wherein the weight ratio of the carbon material and the binder in the first composite carbon layer is 80: 20 to 95: 5, and the weight ratio of the carbon material and the binder in the second composite carbon layer is 95: 5 to 99: 1, and
wherein the thickness of the first composite carbon layer is 5 to 20 *µ*m, and the thickness of the second composite carbon layer is 1 to 5 *µ*m.

The thickness ratio of the first composite carbon layer and the second composite carbon layer may be 20: 1 to 1: 1.

The solid electrolyte membrane may include any one selected from the group consisting of Li₂S-P₂S₅, Li₂S-LiI-P₂S₅, Li₂S-P₂S₅-LiCl, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅ -Al₂S₃, Li₂S-GeS₂, Li₂S-GeS₂-ZnS, Li₆PS₅Cl, Li₁₀GeP₂S₁₂, Li₃PS₄, Li₇P₃S₁₁ and combinations thereof.

The solid electrolyte membrane may comprise a sulfide-based solid electrolyte having an Argyrodite structure.

The positive electrode may contain a positive electrode active material and a solid electrolyte.

The carbon material may comprise any one selected from the group consisting of graphite, graphene, carbon black, carbon nanotubes, carbon fibers, activated carbon, and combinations thereof.

The binder may comprise any one selected from the group consisting of poly(vinyl acetate), polyvinyl alcohol, polyethylene oxide, polyvinylpyrrolidone, alkylated polyethylene oxide, crosslinked polyethylene oxide, polyvinyl ether, poly(methyl methacrylate), polyvinylidene fluoride (PVDF), a copolymer of polyhexafluoropropylene and polyvinylidene fluoride, poly(ethylacrylate), polytetrafluoroethylene, polyvinylchloride, polyacrylonitrile, polyvinylpyridine, polystyrene, styrene-butadiene rubber (SBR), carboxymethyl cellulose (CMC) and combinations thereof.

### [Advantageous Effects]

According to the present invention, since a plurality of composite carbon layers with different contents of binder are included between the negative electrode and the solid electrolyte membrane of the all-solid-state battery, the composite carbon layer provided adjacent to the solid electrolyte membrane has high elasticity and acts as a protective layer within the battery and thus can improve the physical and mechanical stability of the all-solid-state battery, and can prevent damage to the solid electrolyte membrane due to the volume change of the battery that occurs during charging/discharging and can increase the interfacial stability with the negative electrode, and the composite carbon layer, which has a relatively small content of binder, induces lithium diffusion in the plane direction to prevent precipitation of lithium dendrite, and as a result, has the effect of improving the lifetime characteristics of the all-solid-state battery.

### [Description of Drawings]

FIG. 1 shows a schematic cross-sectional view of the all-solid-state battery according to an example of the present invention.
FIG. 2 is a graph showing lifetime characteristics of all-solid-state batteries according to an example and comparative examples of the present invention.

### [Best Mode]

Hereinafter, embodiments of the present invention will be described in detail. Prior to this, the terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

Throughout the present specification, when a certain part 'includes' a certain component, it means that it may further include other components without excluding other components unless otherwise stated.

In order to clearly express the various layers and regions in the drawing, the thickness is enlarged and shown, and when a part such as a layer, film, region, plate, etc. is said to be "on" the other part, this includes not only the case where it is "directly on" the other part, but also the case where there is another part in between. Conversely, when the part is said to be "directly on" the other part, it means that there is no other part in between.

Hereinafter, an all-solid-state battery according to an example will be described.

The present invention relates to an all-solid-state battery that prevents the generation of lithium dendrite and has improved physical stability and lifetime characteristics.

In general, an all-solid-state battery using a solid electrolyte can increase the safety of the battery and prevent leakage of the electrolyte solution, thereby improving the reliability of the battery. However, in such an all-solid-state battery, when charging/discharging is repeated, a phenomenon that is not uniformly plated on the lithium metal negative electrode occurs. Accordingly, there is a problem that lithium dendrite can be generated on the lithium metal negative electrode, which can cause a short circuit in the cell, and the solid electrolyte membrane can be damaged due to the volume change of the battery that occurs during charging/discharging.

In contrast, in order to solve the above problems, the present invention applies a plurality of composite carbon layers having different contents of binder to the negative electrode of the all-solid-state battery, and thus the composite carbon layer provided adjacent to the solid electrolyte membrane has high elasticity and acts as a protective layer within the battery and thus can improve the physical and mechanical stability of the all-solid-state battery, and can prevent damage to the solid electrolyte membrane due to the volume change of the battery that occurs during charging/discharging and can increase the interfacial stability with the negative electrode, and the composite carbon layer, which has a relatively small content of binder, induces lithium diffusion in the plane direction to prevent precipitation of lithium dendrite, and as a result, has the effect of improving the lifetime characteristics of the all-solid-state battery.

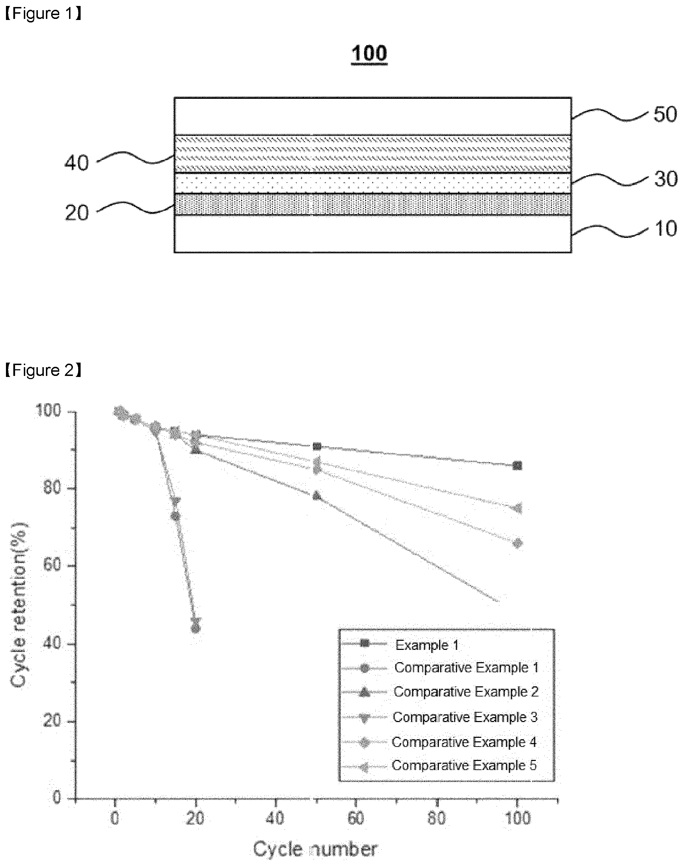

FIG. 1 is a cross-sectional view showing a schematic configuration of an all-solid-state battery according to one embodiment.

Referring to FIG. 1, the all-solid-state battery 100 according to one embodiment comprises a positive electrode 50, a negative electrode 10, and a solid electrolyte membrane 40 interposed between the positive electrode and the negative electrode and comprises a second composite carbon layer 20 and a first composite carbon layer 30 between the solid electrolyte membrane and the negative electrode.

The second composite carbon layer 20 and the first composite carbon layer 30 will be described later in more detail.

The positive electrode may comprise a current collector and a positive electrode active material layer formed on at least one side of the current collector, and the positive electrode active material layer may contain a positive electrode active material, a solid electrolyte, and an electrically conductive material. In addition, in one specific embodiment of the present invention, the positive electrode active material layer may further contain a binder material. The addition of the binder material can increase the binding force between the positive electrode active material layer and the current collector and/or the solid electrolyte layers, and independently or together with this, it helps to improve the binding force between the components contained in the positive electrode active material.

The positive electrode active material can be used without limitation as long as it can be used as the positive electrode active material of a lithium-ion secondary battery. For example, the positive electrode active material may comprise layered compounds such as lithium cobalt oxide (LiCoO₂) and lithium nickel oxide (LiNiO₂) or compounds substituted with one or more transition metals; lithium manganese oxides such as formulas Li₁₊ₓMn₂₋ₓO₄(wherein x is 0 to 0.33), LiMnO₃, LiMn₂O₃, and LiMnO₂; lithium copper oxide (Li₂CuO₂); vanadium oxide such as LiV₃O₈, LiV₃O₄, V₂O₅, and Cu₂V₂O₇; lithium nickel oxide represented by formula LiNi₁₋ₓMₓO₂ (wherein M = Co, Mn, Al, Cu, Fe, Mg, B or Ga, and contains one or more of the above elements, x = 0.01 to 0.3), for example, LiN_{0.8}Co_{0.1}M_{0.1}O₂; lithium manganese composite oxide represented by formula LiMn₂₋ₓMₓO₂(wherein M = Co, Ni, Fe, Cr, Zn or Ta, x = 0.01 to 0.1) or Li₂Mn₃MO₈(wherein M = Fe, Co, Ni, Cu or Zn); lithium manganese composite oxide with spinel structure represented by LiNiₓMn₂₋ₓO₄; LiMn₂O₄ in which a part of Li in the formula is replaced with an alkaline earth metal ion; disulfide compounds; Fe₂(MoO₄)₃ and the like. However, it is not limited only to these. The positive electrode active material may be contained in an amount ranging from 70 to 95% by weight, 75 to 95% by weight, or 80 to 95% by weight, based on 100% by weight of the electrode layer.

The solid electrolyte contained in the positive electrode may comprise, for example, any one selected from the group consisting of Li₂S-P₂S₅, Li₂S-LiI-P₂S₅, Li₂S-P₂S₅-LiCl, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅ -Al₂S₃, Li₂S-GeS₂, Li₂S-GeS₂-ZnS, Li₆PS₅Cl, Li₁₀GeP₂S₁₂, Li₃PS₄, Li₇P₃S₁₁ and combinations thereof, and preferably may comprise Li₆PS₅Cl, which is a sulfide-based solid electrolyte having an Argyrodite structure. The solid electrolyte may be contained in an amount ranging from 1 to 30% by weight, 1 to 20% by weight, or 1 to 15% by weight, based on 100% by weight of the electrode layer.

The electrically conductive material is not particularly limited as long as it has electrical conductivity without causing chemical changes in the relevant battery, and for example, may comprise one or a mixture of two or more selected from graphite such as natural graphite or artificial graphite; carbon blacks such as carbon black, acetylene black, Ketjen black, channel black, furnace black, lamp black, and thermal black; electrically conductive fibers such as carbon fibers such as vapor grown carbon fiber (VGCF) or metal fibers; metal powders such as carbon fluoride, aluminum and nickel powder; electrically conductive whiskers such as zinc oxide and potassium titanate; electrically conductive metal oxides such as titanium oxide; electrically conductive materials such as polyphenylene derivative. The electrically conductive material may be contained in an amount ranging from 1 to 10% by weight, or 1 to 5% by weight, based on 100% by weight of the electrode layer.

The binder is not particularly limited as long as it is a component that assists in bonding the active material and the electrically conductive material and bonding to the current collector, and for example, may comprise polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene-butadiene rubber (SBR), fluoro rubber, various copolymers thereof and the like. The binder may be typically contained in an amount ranging from 1 to 20% by weight or 1 to 10% by weight based on 100% by weight of the electrode layer.

The negative electrode may be a negative electrode current collector or may include a negative electrode active material layer formed on a surface of the current collector.

The negative electrode current collector is not particularly limited as long as it has conductivity without causing chemical change in the all-solid-state battery, and for example, may comprise copper, stainless steel, nickel, titanium, sintered carbon, or copper, or stainless steel surface-treated with carbon, nickel, titanium, silver or the like. In addition, the negative electrode current collector may be used in various forms such as a film, a sheet, a foil, a net, a porous body, a foam, and a non-woven fabric having fine irregularities formed on their surfaces, as in the positive electrode current collector.

In one embodiment of the present invention, the negative electrode and/or the positive electrode may further include various additives for the purpose of supplementing or improving physicochemical properties. The additives are not particularly limited, but may include one or more additives such as oxidation stability additives, reduction stability additives, flame retardants, heat stabilizers, and antifogging agents.

The negative electrode and the positive electrode may be prepared by using cyclic aliphatic hydrocarbons such as cyclopentane, cyclohexane or mixtures thereof, aromatic hydrocarbons such as toluene, xylene or mixtures thereof, or aliphatic hydrocarbons and aromatic hydrocarbons alone or in combination of two or more as organic solvents when preparing a slurry for the electrodes, respectively. The organic solvent may be appropriately selected and used according to drying speed or environmental conditions.

The solid electrolyte membrane 40 is provided between the negative electrode 10 and the positive electrode 50.

The solid electrolyte membrane may contain a solid electrolyte and a binder.

The solid electrolyte contained in the positive electrode may comprise, for example, any one selected from the group consisting of Li₂S-P₂S₅, Li₂S-LiI-P₂S₅, Li₂S-P₂S₅-LiCl, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅ -Al₂S₃, Li₂S-GeS₂, Li₂S-GeS₂-ZnS, Li₆PS₅Cl, Li₁₀GeP₂S₁₂, Li₃PS₄, Li₇P₃S₁₁ and combinations thereof. The solid electrolyte may be typically contained in an amount ranging from 80 to 100% by weight, 90 to 100% by weight, or 95 to 100% by weight based on 100% by weight of the solid electrolyte membrane.

The binder contained in the solid electrolyte membrane is not particularly limited as long as it is a component that assists in the binding of the solid electrolyte, and for example, may comprise polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene-butadiene rubber (SBR), fluoro rubber, various copolymers thereof and the like. The binder may be contained in an amount ranging from 1 to 20% by weight or 1 to 10% by weight based on 100% by weight of the solid electrolyte membrane.

The ionic conductivity of the solid electrolyte membrane may be, for example, in excess of 0.5×10⁻³ S/cm and less than or equal to 1×10⁻¹ S/cm. If the ionic conductivity of the solid electrolyte membrane is less than 0.5×10⁻³ S/cm, since lithium ion conduction between the positive electrode and the negative electrode within the structure of the all-solid-state battery cannot be provided as a main path, it is difficult to implement the basic performance of the cell. The higher the ionic conductivity of the solid electrolyte membrane, the more advantageous it is, but when comprehensively considering the characteristics of the solid electrolyte, limitations in performance implementation, atmospheric stability and the like, it is desirable to limit it to a range of 1×10⁻¹ S/cm or less.

A second composite carbon layer 20 and a first composite carbon layer 30 are further comprised between the negative electrode 10 and the solid electrolyte membrane 40.

The first composite carbon layer is provided adjacent to one surface of the solid electrolyte membrane, and the second composite carbon layer may be provided adjacent to one surface of the negative electrode.

The first composite carbon layer and the second composite carbon layer contain a carbon material and a binder.

The carbon material may not be limited to the type as long as it can impart electrical conductivity to the first composite carbon layer and the second composite carbon layer, and for example, may comprise any one selected from the group consisting of graphite, graphene, carbon black, carbon nanotubes, carbon fibers, activated carbon, and combinations thereof.

The binder may comprise, for example, any one selected from the group consisting of poly(vinyl acetate), polyvinyl alcohol, polyethylene oxide, polyvinylpyrrolidone, alkylated polyethylene oxide, crosslinked polyethylene oxide, polyvinyl ether, poly(methyl methacrylate), polyvinylidene fluoride (PVDF), a copolymer of polyhexafluoropropylene and polyvinylidene fluoride, poly(ethylacrylate), polytetrafluoroethylene, polyvinylchloride, polyacrylonitrile, polyvinylpyridine, polystyrene, styrene-butadiene rubber (SBR), carboxymethyl cellulose (CMC) and combinations thereof, and preferably, may be polyvinylidene fluoride (PVDF).

The content of the binder in the first composite carbon layer and the second composite carbon layer is different from each other. Also, in one embodiment, the content of the binder in the second composite carbon layer may be lower than the content of the binder in the first composite carbon layer.

Specifically, the weight ratio of carbon material and the binder in the first composite carbon layer is 80: 20 to 95: 5, for example, 85: 15 to 95: 5, for example, 90: 10.

The weight ratio of carbon material and the binder in the second composite carbon layer is 95: 5 to 99: 1, for example, 96: 4 to 99: 1, 97: 3 to 99: 1, or 98: 2 to 99: 1. If the content of carbon material in the second composite carbon layer is less than 95 parts by weight relative to the total content of carbon material and the binder, there may be a problem that electrical conductivity and ionic conductivity may be reduced, thereby resulting in relatively overvoltage.

In the all-solid-state battery according to the present invention, since the second composite carbon layer provided adjacent to one surface of the negative electrode contains a relatively higher content of carbon material than the first composite carbon layer, lithium diffusion can be induced in the surface direction of the all-solid-state battery, not in the thickness direction, thereby preventing the precipitation of lithium dendrite, and thus improving the lifetime characteristics of the all-solid-state battery.

In addition, as the first composite carbon layer provided adjacent to one surface of the solid electrolyte membrane contains a relatively higher content of binder than the second composite carbon layer, it has high elasticity and acts as a protective layer within the all-solid-state battery and thus can improve the physical and mechanical stability of the all-solid-state battery, can prevent damage to the solid electrolyte membrane due to the volume change of the battery that occurs during charging/discharging, and can increase the interfacial stability with the negative electrode.

In one example, the thickness ratio of the first composite carbon layer and the second composite carbon layer may be 20: 1 to 1: 1, preferably 10: 1 to 2: 1. Specifically, the thickness of the first composite carbon layer is 5 *µ*m to 20 *µ*m, and the thickness of the second composite carbon layer is 1 *µ*m to 5 *µ*m.

If the thickness of the first composite carbon layer is less than 5 *µ*m, there may be a problem of not effectively separating Li precipitated during the operation of the battery and electrolyte. If the thickness of the first composite carbon layer exceeds 20 *µ*m, as the thickness of the first composite carbon layer is relatively increased, there may be a problem that overvoltage may occur significantly.

The present invention provides a battery module comprising the all-solid-state battery as a unit cell, a battery pack comprising the battery module, and a device comprising the battery pack as a power source.

In this case, a specific example of the device may be a power tool powered by an electric motor; electric cars comprising an electric vehicle (EV), a hybrid electric vehicle (HEV), a plug-in hybrid electric vehicle (PHEV), and the like; an electric motorcycle comprising an electric bike (E-bike) and an electric scooter (E-scooter); an electric golf cart; and a power storage system, but is not limited thereto.

Hereinafter, specific examples of the present invention are presented. However, the examples described below are only for specifically illustrating or explaining the present invention, and the present invention is not limited thereto. In addition, the content not described herein can be sufficiently technically inferred by those skilled in the art, and thus the description thereof will be omitted.

### Example 1

### 1. Preparation of slurry for formation of composite carbon layer

(1) The slurry for forming a first composite carbon layer was prepared in the following way.
   Carbon black (Super P) as a carbon material and polyvinylidene fluoride (PVDF) as a binder at a ratio of 90: 10 wt.% were mixed in the solvent N-Methylpyrrolidone (NMP) to prepare a slurry.
(2) A slurry for forming a second composite carbon layer was prepared in the same manner as the slurry for forming the first composite carbon layer, except that carbon black (Super P) as a carbon material and polyvinylidene fluoride (PVDF) as a binder are mixed in an amount of 95: 5 wt. %.

### 2. Manufacture of positive electrode

For the preparation of the slurry, LiCoO₂ powder as a positive electrode active material, Argyrodite structured crystalline sulfide solid electrolyte Li₆PS₅Cl as a solid electrolyte, Super C65 from Timcal Company as an electrically conductive material and styrene butadiene rubber (SBR) as a binder were mixed in a weight ratio of 80: 15: 1: 4, respectively, and put into xylene and stirred to prepare a slurry for the positive electrode, This was applied to an aluminum current collector with a thickness of 20 *µ*m using a doctor blade, and the resulting product was vacuum dried at 120 °C for 4 hours. Thereafter, the product obtained by vacuum drying was subjected to a rolling process using cold iso pressure (CIP) to obtain a positive electrode having an electrode loading of 4 mAh/cm², an electrode layer thickness of 128 *µ*m and a porosity of 15%.

### 3. Manufacture of solid electrolyte membrane

Li₆PS₅Cl powder as a crystalline sulfide solid electrolyte and styrene-butadiene rubber (SBR) as a binder were mixed at 95: 5 wt% in xylene as a solvent to prepare a slurry. To the release film, the mixed slurry was applied and coated using a doctor blade. The coating gap was 250 *µ*m and the coating speed was 20 mm/min. The release film coated with the slurry was moved to a glass plate, and then held horizontally, dried overnight at room temperature, and vacuum dried at 100 °C for 12 hours. The thickness of the obtained solid electrolyte membrane was 100 *µ*m.

### 4. Manufacture of battery

(1) The positive electrode prepared above was punched into a square of 4 cm². A Ni foil with a square size of 6.25 cm² was prepared as a negative electrode current collector, and the slurry for the formation of the second composite carbon layer prepared above was applied onto the Ni foil, and the resultant was vacuum-dried at 120 °C for 4 hours to form a second composite carbon layer with a thickness of 5 *µ*m on one surface of the negative electrode current collector.
(2) Next, the slurry for the formation of the first composite carbon layer prepared above is applied to one surface of the release film, the resultant is vacuum-dried at 120 °C for 4 hours, prepared in a square size of 6.25 cm², and then the first composite carbon layer was attached to one surface of the solid electrolyte membrane to be a thickness of 10 *µ*m using Cold Isostatic Pressing (CIP).
(3) A solid electrolyte membrane is interposed between the positive electrode and the negative electrode to manufacture a mono-cell (half-cell). In this case, the second composite carbon layer coated on the negative electrode current collector and the first composite carbon layer coated on the solid electrolyte membrane were interposed to contact each other, and the cells were combined in a CIP process to manufacture an all-solid battery.

### Comparative Example 1

An all-solid-state battery was manufactured in the same manner as in Example 1 above, except that the first composite carbon layer and the second composite carbon layer are not formed on the negative electrode and the solid electrolyte membrane, respectively.

### Comparative Example 2

An all-solid-state battery was manufactured in the same manner as in Example 1 above, except that in Example 1 above, the second composite carbon layer is not formed.

### Comparative Example 3

An all-solid-state battery was manufactured in the same manner as in Example 1 above, except that in Example 1 above, the first composite carbon layer is not formed.

### Comparative Example 4

An all-solid-state battery was manufactured in the same manner as in Example 1 above, except that in Example 1 above, the thickness of the first composite carbon layer is 3 *µ*m.

### Comparative Example 5

An all-solid-state battery was manufactured in the same manner as in Example 1 above, except that in Example 1 above, a mixture of carbon black (Super P) and polyvinylidene fluoride (PVDF) at a ratio of 90: 10 wt. % was used as a slurry for forming a second composite carbon layer, and a mixture of carbon black (Super P) and polyvinylidene fluoride (PVDF) at a ratio of 95: 5 wt.% is used as a slurry for forming the first composite carbon layer.

### Experimental Example 1: Evaluation of performance of battery

Energy density was evaluated depending on the number of times (cycles) of charging/discharging of the all-solid-state batteries manufactured in Example 1 and Comparative Examples 1 to 5, and the results are shown in FIG. 2.

Referring to FIG. 2, it can be confirmed that in the case of the all-solid-state battery according to Example 1, a higher capacity retention rate of about 90% or more is shown even after about 100 charging/discharging cycles than in the case of the all-solid-state battery according to Comparative Examples 1 to 5, and thus it represents the best lifetime characteristics. In particular, it can be seen that the all-solid-state battery according to Example 1 shows a high-capacity retention rate of more than 96% at about 10 times of charging/discharging compared to the initial period.

In contrast, it can be seen that in the case of the all-solid-state battery according to Comparative Example 1 in which neither the first composite carbon layer nor the second composite carbon layer is provided, or the all-solid-state battery according to Comparative Example 3 in which the first composite carbon layer is not provided, the capacity retention rate is rapidly decreased compared to the initial capacity from about 10 times of charging/discharging.

In addition, it can be seen that in all the cases of the all-solid-state battery according to Comparative Example 2 in which the second composite carbon layer is not provided, the all-solid-state battery according to Comparative Example 4 in which the thickness range of the first composite carbon layer is relatively thin, and the all-solid-state battery according to Comparative Example 5 in which the binder contents in the first composite carbon layer and the second composite carbon layer are reversed, the capacity retention rates are significantly reduced compared to the all-solid-state battery according to Example 1.

### [Description of Symbol]

10: Negative electrode
20: Second composite carbon layer
30: First composite carbon layer
40: Solid electrolyte membrane
50: Positive electrode
100: All-solid-state battery
40: Solid electrolyte membrane
50: Positive electrode
100: All-solid-state battery

## Claims

1. An all-solid-state battery, comprising:
a positive electrode;
a negative electrode; and
a solid electrolyte membrane interposed between the positive electrode and the negative electrode,
wherein a first composite carbon layer and a second composite carbon layer are further comprised between the negative electrode and the solid electrolyte membrane, wherein the first composite carbon layer is provided adjacent to one surface of the solid electrolyte membrane, and the second composite carbon layer is provided adjacent to one surface of the negative electrode
wherein the first composite carbon layer and the second composite carbon layer each contain a carbon material and a binder, and the content of the binder in the first composite carbon layer and the second composite carbon layer is different from each other,
and the content of the binder in the first composite carbon layer is represented by the weight ratio of the carbon material and the binder in the first composite carbon layer,
and the content of the binder in the second composite carbon layer is represented by the weight ratio of the carbon material and the binder in the second composite carbon layer,
wherein the weight ratio of the carbon material and the binder in the first composite carbon layer is 80: 20 to 95: 5, and the weight ratio of the carbon material and the binder in the second composite carbon layer is 95: 5 to 99: 1, and
wherein the thickness of the first composite carbon layer is 5 to 20 *µ*m, and the thickness of the second composite carbon layer is 1 to 5 *µ*m.

2. The all-solid-state battery according to claim 1, wherein the thickness ratio of the first composite carbon layer and the second composite carbon layer is 20: 1 to 1: 1.

3. The all-solid-state battery according to claim 1, wherein the solid electrolyte membrane is any one selected from the group consisting of Li₂S-P₂S₅, Li₂S-LiI-P₂S₅, Li₂S-P₂S₅-LiCl, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅ -Al₂S₃, Li₂S-GeS₂, Li₂S-GeS₂-ZnS, Li₆PS₅Cl, Li₁₀GeP₂S₁₂, Li₃PS₄, Li₇P₃S₁₁ and combinations thereof.

4. The all-solid-state battery according to claim 1, wherein the solid electrolyte membrane comprises a sulfide-based solid electrolyte of an Argyrodite structure.

5. The all-solid-state battery according to claim 1, wherein the positive electrode comprises a positive electrode active material and a solid electrolyte.

6. The all-solid-state battery according to claim 1, wherein the carbon material includes any one selected from the group consisting of graphite, graphene, carbon black, carbon nanotubes, carbon fibers, activated carbon, and combinations thereof.

7. The all-solid-state battery according to claim 1, wherein the binder is any one selected from the group consisting of poly(vinyl acetate), polyvinyl alcohol, polyethylene oxide, polyvinylpyrrolidone, alkylated polyethylene oxide, crosslinked polyethylene oxide, polyvinyl ether, poly(methyl methacrylate), polyvinylidene fluoride (PVDF), a copolymer of polyhexafluoropropylene and polyvinylidene fluoride, poly(ethylacrylate), polytetrafluoroethylene, polyvinylchloride, polyacrylonitrile, polyvinylpyridine, polystyrene, styrene-butadiene rubber (SBR), carboxymethyl cellulose (CMC) and combinations thereof.

## Patentansprüche

1. Festkörperbatterie, umfassend:
eine positive Elektrode;
eine negative Elektrode; und
eine Festelektrolytmembran, die zwischen der positiven Elektrode und der negativen Elektrode angeordnet ist,
wobei eine erste Verbundkohlenstoffschicht und eine zweite Verbundkohlenstoffschicht ferner zwischen der negativen Elektrode und der Festelektrolytmembran enthalten sind, wobei die erste Verbundkohlenstoffschicht benachbart zu einer Oberfläche der Festelektrolytmembran bereitgestellt ist und die zweite Verbundkohlenstoffschicht benachbart zu einer Oberfläche der negativen Elektrode bereitgestellt ist,
wobei die erste Verbundkohlenstoffschicht und die zweite Verbundkohlenstoffschicht jeweils ein Kohlenstoffmaterial und ein Bindemittel enthalten und der Gehalt des Bindemittels in der ersten Verbundkohlenstoffschicht und der zweiten Verbundkohlenstoffschicht voneinander verschieden ist,
und der Gehalt des Bindemittels in der ersten Verbundkohlenstoffschicht durch das Gewichtsverhältnis des Kohlenstoffmaterials und des Bindemittels in der ersten Verbundkohlenstoffschicht dargestellt ist,
und der Gehalt des Bindemittels in der zweiten Verbundkohlenstoffschicht durch das Gewichtsverhältnis des Kohlenstoffmaterials und des Bindemittels in der zweiten Verbundkohlenstoffschicht dargestellt ist,
wobei das Gewichtsverhältnis des Kohlenstoffmaterials und des Bindemittels in der ersten Verbundkohlenstoffschicht 80:20 bis 95:5 beträgt und das Gewichtsverhältnis des Kohlenstoffmaterials und des Bindemittels in der zweiten Verbundkohlenstoffschicht 95:5 bis 99:1 beträgt, und
wobei die Dicke der ersten Verbundkohlenstoffschicht 5 bis 20 *µ*m beträgt und die Dicke der zweiten Verbundkohlenstoffschicht 1 bis 5 *µ*m beträgt.

2. Festkörperbatterie nach Anspruch 1, wobei das Dickenverhältnis der ersten Verbundkohlenstoffschicht und der zweiten Verbundkohlenstoffschicht 20:1 bis 1:1 beträgt.

3. Festkörperbatterie nach Anspruch 1, wobei die Festelektrolytmembran irgendeine ausgewählt aus der Gruppe bestehend aus Li₂S-P₂S₅, Li2S-LiI-P2S₅, Li₂S-P₂S₅-LiCl, Li2S-LiI-Li₂O-P₂S₅, Li2S-LiBr-P2S5, Li₂S-Li₂O-P₂S₅, Li2S-Li₃PO₄-P2S5, Li2S-P₂S₅-P₂O₅, Li2S-P2S5-SiS₂, Li2S-P2S5-SnS, Li2S-P₂S₅-Al₂S₃, Li₂S-GeS₂, Li₂S-GeS₂-ZnS, Li₆PS₅Cl, Li₁₀GeP₂S₁₂, Li₃PS₄, Li₇P₃S₁₁ und Kombinationen davon ist.

4. Festkörperbatterie nach Anspruch 1, wobei die Festelektrolytmembran einen Festelektrolyten auf Sulfidbasis mit einer Argyrodit-Struktur umfasst.

5. Festkörperbatterie nach Anspruch 1, wobei die positive Elektrode ein Positivelektrodenaktivmaterial und einen Festelektrolyten umfasst.

6. Festkörperbatterie nach Anspruch 1, wobei das Kohlenstoffmaterial irgendeines ausgewählt aus der Gruppe bestehend aus Graphit, Graphen, Ruß, Kohlenstoffnanoröhren, Kohlenstofffasern, Aktivkohle und Kombinationen davon umfasst.

7. Festkörperbatterie nach Anspruch 1, wobei das Bindemittel irgendeines ausgewählt aus der Gruppe bestehend aus Poly(vinylacetat), Polyvinylalkohol, Polyethylenoxid, Polyvinylpyrrolidon, alkyliertem Polyethylenoxid, vernetztem Polyethylenoxid, Polyvinylether, Poly(methylmethacrylat), Polyvinylidenfluorid (PVDF), einem Copolymer von Polyhexafluorpropylen und Polyvinylidenfluorid, Poly(ethylacrylat), Polytetrafluorethylen, Polyvinylchlorid, Polyacrylnitril, Polyvinylpyridin, Polystyrol, Styrol-Butadien-Kautschuk (SBR), Carboxymethylcellulose (CMC) und Kombinationen davon ist.

## Revendications

1. Batterie entièrement solide, comprenant :
une électrode positive ;
une électrode négative ; et
une membrane d'électrolyte solide interposée entre l'électrode positive et l'électrode négative,
dans laquelle une première couche de carbone composite et une deuxième couche de carbone composite sont en outre comprises entre l'électrode négative et la membrane d'électrolyte solide, dans laquelle la première couche de carbone composite est fournie adjacente à une surface de la membrane d'électrolyte solide, et la deuxième couche de carbone composite est fournie adjacente à une surface de l'électrode négative,
dans laquelle la première couche de carbone composite et la deuxième couche de carbone composite contiennent chacune un matériau de carbone et un liant, et la teneur du liant dans la première couche de carbone composite et la deuxième couche de carbone composite est différente l'une de l'autre, et
la teneur du liant dans la première couche de carbone composite est représentée par le rapport en poids du matériau de carbone et du liant dans la première couche de carbone composite, et
la teneur du liant dans la deuxième couche de carbone composite est représentée par le rapport en poids du matériau de carbone et du liant dans la deuxième couche de carbone composite,
dans laquelle le rapport en poids du matériau de carbone et du liant dans la première couche de carbone composite est 80:20 à 95:5, et le rapport en poids du matériau de carbone et du liant dans la deuxième couche de carbone composite est 95:5 à 99:1, et
dans laquelle l'épaisseur de la première couche de carbone composite est 5 à 20 *µ*m, et l'épaisseur de la deuxième couche de carbone composite est 1 à 5 *µ*m.

2. Batterie entièrement solide selon la revendication 1, dans laquelle le rapport de l'épaisseur de la première couche de carbone composite et de la deuxième couche de carbone composite est 20:1 à 1:1.

3. Batterie entièrement solide selon la revendication 1, dans laquelle la membrane d'électrolyte solide est un élément quelconque sélectionné dans le groupe constitué de Li₂S-P₂S₅, Li₂S-LiI-P₂S₅, Li₂S-P₂S₅-LiCl, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅ -Al₂S₃, Li₂S-GeS₂, Li₂S-GeS₂-ZnS, Li₆PS₅Cl, Li₁₀GeP₂S₁₂, Li₃PS₄, Li₇P₃S₁₁ et des combinaisons de ces derniers.

4. Batterie entièrement solide selon la revendication 1, dans laquelle la membrane d'électrolyte solide comprend un électrolyte solide à base de sulfure d'une structure Argyrodite.

5. Batterie entièrement solide selon la revendication 1, dans laquelle l'électrode positive comprend un matériau actif d'électrode positive et un électrolyte solide.

6. Batterie entièrement solide selon la revendication 1, dans laquelle le matériau de carbone inclut un élément quelconque sélectionné dans le groupe constitué de graphite, graphène, noir de carbone, nanotubes de carbone, fibres de carbone, charbon actif, et des combinaisons de ces derniers.

7. Batterie entièrement solide selon la revendication 1, dans laquelle le liant est un élément quelconque sélectionné dans le groupe constitué d'un acétate de polyvinyle, alcool de polyvinyle, oxyde de polyéthylène, polyvinylpyrrolidone, oxyde de polyéthylène alkylé, oxyde de polyéthylène réticulé, éther de polyvinyle, poly(méthacrylate de méthyle), fluorure de polyvinylidène (PVDF), un copolymère de polyhexafluoropropylène et fluorure de polyvinylidène, poly(acrylate d'éthyle), polytétrafluoroéthylène, chlorure de polyvinyle, polyacrylonitrile, polyvinylpyridine, polystyrène, caoutchouc de butadiène-styrène (SBR), cellulose de carboxyméthyle (CMC) et des combinaisons de ces derniers.
